# EUROPEAN PATENT APPLICATION

(11) **EP 1 840 020 A1**
(43) Date of publication of application: **03.10.2007**
(21) Application number: 07005886.2
(22) Date of filing: 22.03.2007
(51) Int. Cl.: B62J 1/00, B29C 41/06

(54) **Production method for motorcycle saddles**

(30) Priority: 31.03.2006 IT BG20060018
(71) Applicant: ACERBIS ITALIA S.P.A., 24021 Albino (Bergamo) (IT)
(72) Inventor: Signori, Walter, 24021 Albino (Bergamo) (IT)
(74) Representative: Gatti, Enrico

(57) **Abstract**

A production method for a motorcycle saddle (10), characterised by comprising the steps of obtaining a hollow body (11) by rotational moulding; then filling said hollow body (11) with expanded polyurethane.

## Description

The present invention relates to a motorcycle saddle production method and to a motorcycle saddle.

Motorcycle saddles are currently produced using three different steps.

The lower rigid part is initially moulded by injection moulding. The result is a saddle-shaped container with the top completely open, in other words without a cover. This substantially rigid part gives consistency to the saddle structure.

This part is then filled with expanded polyurethane or expanded PUR of a certain hardness.

The expanded PUR forms the saddle interior, its outer surface being that on which the driver sits, while its lower rigid part is that which is to be fixed to the motorcycle.

Finally the outer surface of the expanded PUR is covered with leather or a similar material, to give the saddle a better appearance and to insulate the PUR from contact with the outside. The leather is glued to the PUR and is fixed by clips to the underlying rigid part.

The object of the present invention is to provide a production method for a motorcycle saddle which enables a motorcycle saddle to be produced more easily by simplifying the manufacturing procedure and ensuring better consistency and robustness of the saddle.

This object is attained according to the present invention by a production method for a motorcycle saddle, characterised by comprising the steps of obtaining a hollow body by rotational moulding; then filling said hollow body with expanded polyurethane.

The object is also attained by a motorcycle saddle composed of a one-piece hollow body of thermoplastic material filled internally with expanded polyurethane.

Further characteristics of the invention are described in the dependent claims.

According to the present invention, the Applicant has reduced the production of a motorcycle saddle to only two steps.

In this respect, rotational moulding technology enables a hollow saddle to be obtained, which is then filled with expanded polyurethane.

The characteristics and advantages of the present invention will be apparent from the ensuing detailed description of one embodiment thereof, illustrated by way of non-limiting example in the accompanying drawings, in which:

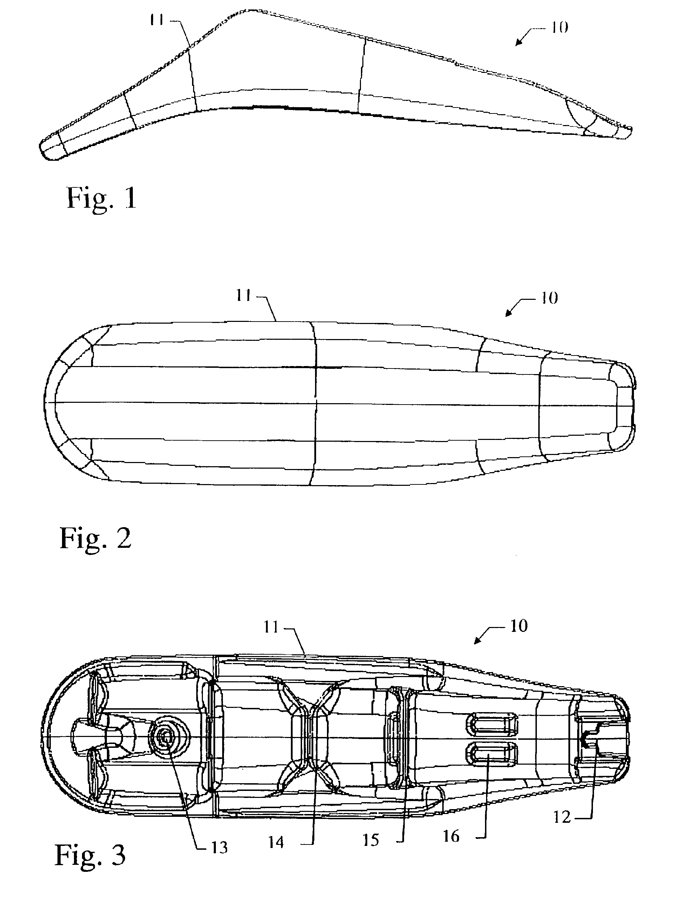

Figure 1 shows a saddle seen in profile;
Figure 2 shows a saddle seen from above;
Figure 3 shows a saddle seen from below.

With reference to the accompanying figures, these show an embodiment of a motorcycle saddle 10. According to the present invention, this comprises a hollow body 11 which defines the outer surface of the saddle 10.

The term "hollow body" signifies a container with an empty space internally.

In our case the hollow body 11 comprises only one communication hole 13 between the internal environment and the external environment. The hole 13 enables the interior of the hollow body 11 to be filled. Other holes of much smaller dimensions than the hole 13 can also be present to enable the air to escape during filling with expanded polyurethane.

The hole 13 is used as a seat for part of the means for connecting the saddle 10 to the motorcycle (not shown).

Another means for connecting the saddle 10 to the motorcycle is a fork 12, interned to cooperate with the relative fixing stem positioned on the motorcycle. The fork 12 is advantageously made of the same material as the hollow body 11, but for requirements of greater strength can be made by co-moulding with a metal insert of a shape suitable to achieve better fixing of the saddle to the motorcycle.

Other fixing means can be provided, such as an inner frame also providing a structural function.

On the hollow body 11, suitable ribs 14, 15 and 16 are also provided to give the required strength to the saddle 10, and/or appropriate means for supporting the saddle on the motorcycle.

According to the present invention, the hollow body is produced by rotational moulding. It is then filled with expanded polyurethane via the hole 13.

Rotational moulding is a technology using hollow moulds composed only of the external part of the figure.

These moulds are mounted on the machine arm, which is able to rotate about two perpendicular axes. The rotational moulding machine is composed essentially of three stations: namely a loading/discharge station in which the mould is mounted and loaded before cycle commencement; a baking station in which the mould enters an oven; and a cooling station in which the mould is cooled before being discharged.

Rotational moulding is a process consisting essentially of four stages.

A weighed quantity of liquid or powder polymer is poured into a hollow mould with thin metal walls, which is mounted on the arm of the moulding machine. The mould is then closed by clamps or bolts. The mould, which is able to rotate about two perpendicular axes, is inserted into a hot oven where it heats the liquid (or powder) in its interior, so increasing its temperature. The mould is driven and the material deposits on the mould walls in successive layers, to form the shape of the moulding. When the material has melted and consolidated, the mould is moved to a cooling station, in which firstly fed air and then vaporized water cause the temperature to fall below the polymer crystallization or solidification temperature.

The biaxial rotation also continues during this stage to prevent material deposits.

When the moulding has cooled, the mould is moved to a discharge station in which the moulding is extracted from the mould. At this point the mould is ready to be reloaded to resume the moulding process.

The main advantages of saddles obtained by rotational moulding are the following.

It enables the final required shape of the saddle to be obtained at low cost. Saddles can be obtained with thin walls in relation to their size and volume. Metal elements can also be inserted, and graphic parts can be moulded directly into the moulding.

The material for forming the hollow body 11 by rotational moulding is a thermoplastic material (e.g. Hytrel) with a thickness variable from 0.5 to 10 mm.

Specifically, this material must have high thermal stability to allow a wide process window during moulding and to prevent property losses during its grinding into powder. It must also have a low degree of viscosity to enable the material to cover the mould inner surface and to melt into a homogeneous mass. The standard measurement used as an indication of the flow properties of materials is their melt flow rate, MFR (viscosity index) measured in g/10 min. Raw materials used for rotational moulding possess a MFR between 2g/10 min and 8g/10 min. Higher MFRs are required for particularly complex moulded details.

In this respect as the MFR increases, the material mouldability improves, making it possible to reproduce accurate surface details.

In contrast, properties such as impact resistance, ESCR and resistance to atmospheric and chemical agents decrease with increasing MFR.

It must also have good impact resistance, a critical factor particularly in low temperature applications.

Its tensile and bending strength must be sufficient for the particular use of the moulding. Polyethylene has a relatively low strength, while synthetic resins such as nylon and polycarbonate offer improved performance levels.

Of thermoplastic materials, polyethylene is advantageously used, however polycarbonate, polypropylene, nylon, PVC, Plastisol and the urethanes can also be used.

According to the present invention, a motorcycle saddle can be produced in one piece by rotational moulding. By using a thermoplastic material the outer finish of the saddle is of pleasant appearance, hence no further decorative operation is necessary. At the same time it provides a sufficient grip for the motorcyclist seated on the saddle.

The internally contained expanded polyurethane (of density variable from 20 to 150 g/cm³) has no contact with the external environment and in particular does not come into contact with water and rain.

Clips for fixing leather to the saddle are no longer present, so eliminating not only a process step but also parts which could become detached and/or render the saddle unattractive.

The system conceived in this manner is susceptible to numerous modifications and variants, all falling within the scope of the inventive concept; moreover all details can be replaced by technically equivalent elements.

## Claims

1. A production method for a motorcycle saddle, **characterised by** comprising the steps of obtaining a hollow body by rotational moulding; then filling said hollow body with expanded polyurethane.

2. A method as claimed in claim 1, **characterised in that** the step of obtaining a hollow body by rotational moulding comprises the use of a thermoplastic material.

3. A method as claimed in claim 2, **characterised in that** the step of obtaining a hollow body by rotational moulding comprises the step of obtaining said hollow body in combination with elements for fixing said hollow body to said motorcycle.

4. A method as claimed in claim 1, **characterised by** comprising the step of forming a single hole for communication between said hollow body and the outside, usable for said step of filling said hollow body with expanded polyurethane.

5. A method as claimed in claim 1, **characterised by** comprising the step of forming a series of small holes to enable air to escape during the step of filling with expanded polyurethane.

6. A motorcycle saddle composed of a one-piece hollow body of thermoplastic material filled internally with expanded polyurethane.

7. A motorcycle saddle as claimed in claim 6, **characterised in that** said hollow body comprises a single hole for the insertion of said expanded polyurethane.

8. A motorcycle saddle as claimed in claim 6, **characterised in that** said hollow body comprises elements for fixing said hollow body to said motorcycle.
